# EUROPÄISCHE PATENTSCHRIFT

(11) **EP 1 707 424 B1**
(45) Veröffentlichungstag und Bekanntmachung des Hinweises auf die Patenterteilung: **20.07.2011**
(21) Anmeldenummer: 06005019.2
(22) Anmeldetag: 11.03.2006
(51) Int. Cl.: B60K 20/00, B62D 33/073

(54) **Schaltungseinheit für ein Nutzfahrzeug**
Shift device for a utility vehicle
Dispositif de changement de vitesse pour une véhicule utilitaire

(30) Priorität: 01.04.2005 DE 102005015081
(43) Veröffentlichungstag der Anmeldung: 04.10.2006
(73) Patentinhaber: MAN Nutzfahrzeuge Österreich AG, 4400 Steyr (AT)
(72) Erfinder: Kletzmair, Walter, A-4540 Bad-Hall (AT); Niederhofer, Franz, A-3353 Seitenstetten (AT)

(56) Entgegenhaltungen:
- EP-A- 0 342 174
- DE-A1- 2 940 794
- DE-A1- 19 735 292
- US-A- 4 269 282

## Beschreibung

### Technisches Gebiet:

Die Erfindung betrifft eine Schaltungseinheit eines Nutzfahrzeugs mit kippbarem Fahrerhaus zur Auswahl eines Fahrganges bei einem Mehrstufengetriebe, die zumindest ein Schaltelement aufweist, das in einem nicht gekippten Zustand des Fahrerhauses wenigstens abschnittsweise einen Bodenbereich des Fahrerhauses sowie einen von einem balgartigen Dämmelement zumindest teilweise umschlossenen, zwischen dem Bodenbereich des Fahrerhauses und einem unterhalb des Bodenbereichs an einem Motoranbauteil befestigten Abstützteller befindlichen Hohlraum durchragt.

### Stand der Technik:

Die vorgenannten Schaltungseinheiten werden üblicherweise in Form von Schalthebelanordnungen eingesetzt, um ein handschaltbares Getriebe von einem Fahrerhaus eines Nutzfahrzeugs aus schalten zu können. Da bei Nutzfahrzeugen, insbesondere LKW, die Fahrerhäuser üblicherweise kippbar ausgeführt sind, um so die Zugänglichkeit zum Motor zu gewährleisten, ist der Schalthebel in diesen Fällen über ein Verbindungselement fest mit dem Getriebe verbunden. Aus diesem Grund kommt es während der Fahrt eines Nutzfahrzeugs, vor allem bei der Fahrt eines LKW durch unebenes Gelände zu teilweise erheblichen Relativbewegungen zwischen dem Fahrerhaus und dem mit dem Getriebe verbundenen Schaltgehänge. Um zum einen Kollisionen zwischen dem Schaltgestänge und dem Fahrerhaus auszuschließen und zum anderen ein Kippen des Fahrerhauses zu ermöglichen, ohne dass es zu Beschädigungen des Schalthebels kommt, sind im Bodenbereich der Fahrerhäuser von Nutzfahrzeugen entsprechend groß dimensionierte Öffnungen bzw. Durchbrüche vorgesehen.

In diesem Zusammenhang ist darauf zu achten, dass trotz der Öffnungen im Bodenbereich eines Fahrerhauses der Fahrer vor Lärm, Gerüchen, Schmutz und nicht zuletzt vor Außenluft, die durch die Bodenöffnung in das Fahrerhaus einströmen könnte, geschützt ist. Hierzu sind üblicherweise gummiartige Manschetten vorgesehen, die unterhalb des Fahrerhauses zwischen dem Fahrerhausboden und einem motorseitig befestigten Abstützteller angeordnet sind und die die Bodenöffnung gegenüber dem umgebenden Raum abdichten. Problematisch hierbei ist, dass aufgrund der teilweise erheblichen Relativbewegungen zwischen dem Fahrerhaus und dem Motor, die gummiartigen Manschetten nicht alle Bewegungen vollständig mit ausführen können und somit Spaltöffnungen zwischen dem oberen Endbereich einer Manschette und dem Fahrerhausboden gebildet werden. Durch diese Spaltöffnungen strömt Umgebungsluft in das Fahrerhaus, so dass der Fahrer insbesondere zusätzlichem Lärm sowie Kälte ausgesetzt ist.

Aus der DE 197 35 292 A1 ist eine Schaltvorrichtung für das Getriebe eines Kraftfahrzeuges mit kippbarem Fahrerhaus bekannt. Die Schaltvorrichtung verfügt über einen Schalthebel, eine Aufhängung und einen Schaltbock, wobei der Schaltbock mit dem Getriebe verbunden ist. Sobald das Fahrerhaus bei der beschriebenen technischen Lösung gekippt wird, bleibt der Schaltbock mit dem Getriebe verbunden, löst sich jedoch von dem am Fahrerhaus befestigten Schaltgestänge.

Desweiteren zeigt US 4269 282 A eine Schaltungseinheit gemäß dem Oberbegriff des Anspruchs 1.

Ausgehend von dem bekannten Stand der Technik liegt der Erfindung die Aufgabe zugrunde, eine in einem kippbaren Fahrerhaus eines Nutzfahrzeugs angeordnete Schalteinheit zur Betätigung eines mehrstufigen Getriebes derart weiterzubilden, dass eine für die Durchführung des Schaltgestänges vorgesehene Bodenöffnung zuverlässig abgedichtet wird, insbesondere auch wenn das Fahrerhaus bei der Fahrt durch unebenes Gelände, starke Bewegungen ausführt. Hierbei soll der Fahrer, insbesondere auch bei einer Geländefahrt mit dem Nutzfahrzeug, auf einfache Weise und ohne erheblichen konstruktiven Aufwand sicher vor Kälte, Lärm, Schmutz sowie durch die Bodenöffnung eindringenden Schmutz geschützt werden.

Die vorgenannte Aufgabe wird mit einer Schaltungseinheit gemäß des geltenden Anspruchs 1 gelöst. Vorteilhafte Ausführungsformen sind Gegenstand der Unteransprüche und werden in der Beschreibung unter Bezugnahme auf die Zeichnungen näher erläutert.

Mit einem Dämmelement, das wie in Anspruch 1 beschrieben ausgeführt ist, wird sicher gestellt, dass das Dämmelement zwischen dem Bodenbereich des Fahrerhauses und dem motorseitig befestigten Abstützteller angeordnet ist und trotzdem Bewegungen relativ zum Motor ausführen kann, ohne dass ein Luftspalt zwischen dem Fahrerhausboden und einem oberen Rand des Dämmelements gebildet wird. Das Dämmelement ist hierbei in Form einer hohlzylinderförmigen Manschette ausgebildet, die derart am Fahrerhaus befestigt ist, dass sie zumindest in einem oberen Bereich die Öffnung im Boden des Fahrerhauses zur Durchführung des Schaltelements vollumfänglich umschließt. Eine geeignete Maßnahme sieht in diesem Zusammenhang vor, im Bereich der Bodenöffnung eine nutförmige Aufnahmestruktur vorzusehen, in die der obere Teil der gummiartigen Manschette, der eine entsprechende Gegenkontur aufweist, eingefügt wird.

Das Dämmelement macht in diesem Fall die Bewegungen des Fahrerhauses mit, während die Relativbewegungen zwischen Fahrerhaus und Motor durch die über ihre Kontaktfläche gleitenden Gleitplatten ausgeglichen werden. Hierbei ist es ganz besonders geeignet, wenn das Dämmelement im oberen Bereich fest mit dem Fahrerhaus verbunden ist, bspw. mittels einer Steck-, Kebe- und/oder Schraubverbindung. Wird das Fahrerhaus in diesem Fall gekippt, verbleibt das Dämmelement am Fahrerhaus. Sobald das Fahrerhaus wieder in seine Betriebsposition zurück geklappt wird, werden die Gleitplatten wieder derart zusammengeführt, dass sie zumindest abschnittsweise eine Kontaktfläche bilden.

Eine weitere besonders geeignete Ausführungsform der Erfindung sieht vor, dass die obere Gleitplatte mittels einer Schraubverbindung mit dem balgartigen Dämmelement verbunden ist. Auf diese Weise bildet die obere Gleitplatte mit dem Dämmelement ein vorgruppierbares Bauteil, das als Gesamtheit an die Bandmontage angeliefert und dort montiert werden kann. Selbstverständlich ist es ebenfalls denkbar, die obere Gleitplatte alternativ oder zusätzlich mittels einer Klebung mit dem Dämmelement zu verbinden.

In einer vorteilhaften Weiterbildung der Erfindung ist die untere Gleitplatte durch eine Schraubverbindung mit dem Abstützteller verbunden. Hierbei ist es sowohl denkbar, dass an dem unteren Gleitelement Gewindestifte vorgesehen sind, die durch entsprechende Bohrungen im Abstützteller geführt und verschraubt werden, oder dass das untere Gleitelement Bohrungen aufweist, durch die mit dem Abstützteller verbundene Gewindestifte oder Schrauben geführt und verschraubt werden.

Alternativ ist es genauso denkbar, dass die untere Gleitplatte zumindest teilweise durch eine der oberen Gleitplatte zugewandte Oberfläche des Abstütztellers gebildet wird. In diesem Fall ist die untere, motorseitige Gleitplatte zumindest teilweise integraler Bestandteil des Abstütztellers. Dies kann sowohl durch eine entsprechend bearbeitete Oberfläche des Abstütztellers als auch durch das Vorsehen einer geeigneten Materialschicht, etwa in Form einer Beschichtung, realisiert werden. Hierbei ist es etwa denkbar, eine Kunststoffschicht und/oder eine aus einer Metalllegierung bestehende Schicht als untere Gleitplatte auf dem Abstützteller vorzusehen.

Besonders eignet sich die erfindungsgemäße Schaltungseinheit in Verbindung mit einem Schaltelement, das Teil eines Schaltgestänges ist. Genauso könnte das wenigstens abschnittsweise einen Bodenbereich des Fahrerhauses, sowie einen von dem balgartigen Dämmelement zumindest teilweise umschlossenen Hohlraum durchragende Schaltelement Teil einer hydraulischen, pneumatischen, elektropneumatischen oder elektronischen Schaltung sein. Wesentlich hierbei ist jedoch jeweils, dass das Schaltelement zur Verbindung einer im Fahrerhaus eines Nutzfahrzeugs angeordneten Schalteinheit und einem Getriebe dient, und dass ein das Schaltelement zumindest teilweise umgebendes Dämmelement vorgesehen ist, das die Bodenöffnung gegen die Umgebung zumindest teilweise abdichtet und das eine Gleitplatte aufweist, die im Betrieb des Nutzfahrzeugs Bewegungen relativ zu einer mit dem Motor oder zumindest einem Motoranbauteil in Wirkverbindung stehenden unteren Gleitplatte ausführt. Hierbei bewegen sich die Gleitplatten derart relativ zueinander, dass die obere, fahrerhausseitige Gleitplatte auf der unteren, motorseitigen Gleitplatte gleitet.

Eine weitere besondere Ausführungsform der erfindungsgemäßen Schaltungseinheit zeichnet sich dadurch aus, dass in der unteren und/oder der oberen Gleitplatte wenigstens ein Kanal vorgesehen ist, durch den Luft in den von dem balgartigen Dämmelement umschlossenen Hohlraum hinein leitbar oder aus dem Luft von dem balgartigen Dämmelement umschlossenen Hohlraum heraus leitbar ist. Auf diese Weise findet ein Luftaustausch zwischen dem von dem Dämmelement umgebenen Hohlraum und der Umgebung statt. Das Luftposter, dass hierbei innerhalb des Hohlraums, von dem balgartigen Dämmelement umgeben angeordnet ist, sorgt für eine Dämpfung der Bewegung des Dämmelements. Durch die Luftkanäle kann bspw. bei einer Bewegung des Fahrerhauses nach unten, die im Hohlraum vorhandene Luft nur vergleichsweise langsam ausströmen. Das Zusammendrücken des balgartigen Dämmelements in Richtung seiner Längsachse erfolgt somit zum einen zeitverzögert und zum anderen gedämpft.

Vorzugsweise ist wenigstens ein Kanal zwischen der oberen und unteren Gleitplatte angeordnet und ist als Ausnehmung in der oberen und/oder der unteren Gleitplatte ausgeführt. Hierbei ist es denkbar, dass der Kanal in unterschiedlichen Querschnitten ausgeführt ist. Genauso ist es möglich, den Kanal mit einem in Längsrichtung veränderten Querschnitt auszuführen, um auf diese Weise in eine bestimmte Strömungsrichtung einen erhöhten Strömungswiderstand zu realisieren.

In einer besonderen Ausführungsform weist der Kanal einen rechteckförmigen Querschnitt auf. Eine Alternativlösung verfügt dagegen über einen zumindest annährend kreisförmigen oder elliptischen Querschnitt.

Eine weitere geeignete Maßnahme sieht in diesem Zusammenhang vor, dass der Strömungskanal in der unteren Gleitplatte vorgesehen ist, während die obere Gleitplatte den Strömungskanal nach oben begrenzt.

Eine weitere ganz besondere Ausführungsform der erfindungsgemäßen Schaltungseinheit verfügt über ein als manschettenartiges Hohlzylinderstück ausgeführtes balgartiges Dämmelement, dessen Zylinderwand wenigstens eine Wölbung aufweist. In diesem Zusammenhang eignet sich besonders die Verwendung eines Schlauchstücks, das in Form eines gummiartigen Schwingungs- bzw. Dehnungskompensators ausgeführt ist. Der Innendurchmesser des Hohlzylinder- bzw. Schlauchstücks wird an die Größe der Bodenöffnung im Fahrerhausboden angepasst. Vorteilhafterweise wird der Innendruchmesser derart gewählt, dass die Bodenöffnung vollumfänglich innerhalb des von der Hohlzylinderwand umgebenen Innendurchmessers des Hohlzylinders liegt.

Bei einer Relativbewegung zwischen dem Fahrerhaus und dem Motor, bzw. den am Motor befestigten Anbauteilen, wie bspw. dem Getriebe, werden die Wölbungen des Dämmelements gestaucht oder gedehnt und Kompensieren somit die Bewegungsunterschiede vornehmlich in Vertikalrichtung. Der Bewegungsausgleich in Horizontalrichtung wird dagegen hauptsächlich durch die Relativbewegungen zwischen oberer und unterer Gleitplatte realisiert.

Im Folgenden wird die Erfindung ohne Beschränkung des allgemeinen Erfindungsgedankens anhand eines Ausführungsbeispiels unter Bezugnahme auf die Zeichnung erläutert. Es zeigen:
Fig.1 Schaltungseinheit
Fig. 2 obere Gleitplatte
Fig. 3 untere Gleitplatte

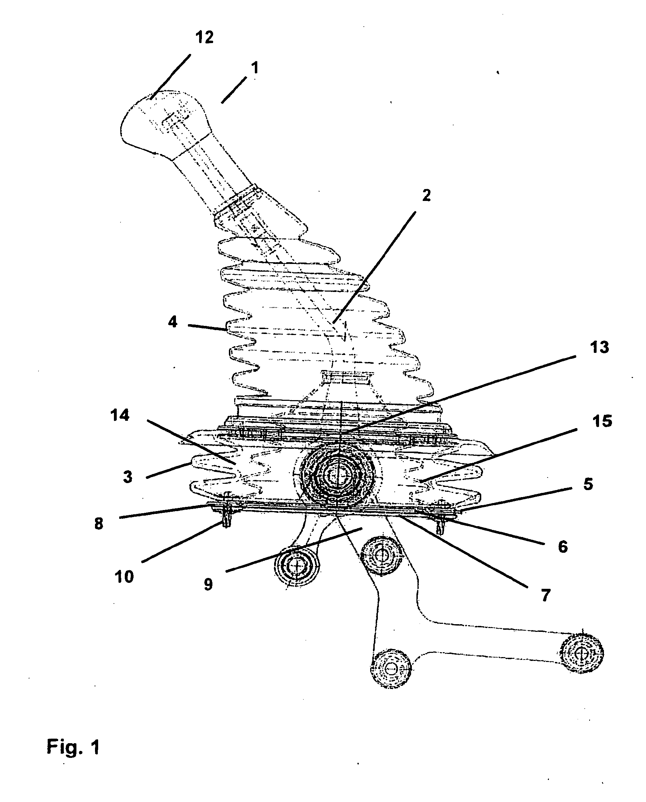

In der Figur 1 ist eine Schaltungseinheit 1 dargestellt, die über ein als Schaltgestänge 9 ausgeführtes Schaltelement 2 verfügt und einen im Fahrerhaus vorgesehenen Schalthebel 12 mit einem Schaltgetriebe verbindet. Mit Hilfe der Schaltungseinheit 1 ist es möglich, verschiedene Gänge eines mehrstufigen Getriebes auszuwählen. An dem Schalthebel 12 ist eine äußere Manschette 4 angebracht, die das Schaltgestänge 9 innerhalb des Fahrerhauses verdeckt und hauptsächlich die Funktion hat, ein optisch annehmbares Erscheinungsbild des Schaltungseinheit 1 innerhalb des Fahrerhauses zu gewährleisten.

Das Schaltelement 2 durchragt sowohl eine im Bodenbereich des Fahrerhauses vorgesehene Bodenöffnung 13 als auch einen Hohlraum 14, der von einem manschettenartig, in Form eines Dämpfungsbalges ausgebildeten Dämmelement 3 umgeben ist. Das Dämmelement ist hierbei unterhalb des Fahrerhauses zwischen dem Bodenbereich des Fahrerhauses und einem am Motor befestigten Abstützteller 7 angeordnet und im Bereich der Bodenöffnung 13 am Fahrerhaus befestigt.

An der dem Motor abgewandten Seite des Abstütztellers 7 ist eine untere Gleitplatte 6 sowie eine innere Manschette 15 mit Hilfe von vier Stiften 10, besonders geeignet sind hierfür Gewindestifte, befestigt. Die Befestigungspunkte der inneren Manschette befinden sich hierbei zwischen der unteren Gleitplatte 6 und dem Abstützteller 7. Wird das Fahrerhaus gekippt, etwa um Wartungsarbeiten am Motor vorzunehmen, verbleiben somit der Abstützteller 7, die innere Manschette 15, die untere Gleitplatte 6 sowie das Schaltgestänge 9 mit dem Motor verbunden, während sich das Fahrerhaus mit dem Dämmelement 3 nach oben bewegt.

Sofern das Fahrerhaus nicht gekippt ist, sich also das Nutzfahrzeug in einem fahrbereiten Zustand befindet, bildet die untere Gleitplatte 6 mit einer darüber befindlichen oberen Gleitplatte 5 eine Kontaktfläche 8. Hierbei berühren sich die untere und die obere Gleitplatte 5, 6, ohne dass sie miteinander fest verfügt sind. Vielmehr können sich die beiden Gleitplatten 5, 6 entlang der Kontaktfläche 8 relativ zu einander bewegen. Auf diese Weise werden Relativbewegungen zwischen dem Fahrerhaus und dem Motor auch bei Geländefahrten zuverlässig ausgeglichen.

Die obere Gleitplatte 5 ist mittels vier Stiften, auch in diesem Fall werden vorzugsweise Gewindestifte verwendet, an der unteren Abschlussfläche des Dämmelements 3 befestigt. Das Dämmelement 3 verfügt hierfür an seiner Unterseite über eine ringförmig ausgebildete Anschlagfläche, die breit genug ist, damit die obere Gleitplatte 5 sicher an dem Dämmelement 3 befestigt werden kann.

An seinem oberen, dem Bodenbereich des Fahrerhauses zugewandten Ende verfügt das Dämmelement 3 über eine Anschlussstruktur, mit der das Dämmelement 3 in einer im Randbereich der Bodenöffnung 13 vorgesehenen umlaufenden Nut befestigbar ist. Wie bereits erwähnt, bewegt sich das Dämmelement 3 mit der daran befestigten oberen Gleitplatte 5 nach oben sofern das Fahrerhaus gekippt wird, während die untere Gleitplatte 6 am Abstützteller 7 verbleibt.

In der unteren Gleitplatte 6 sind ferner Kanäle vorgesehen, die eine luftdurchlässige Verbindung zwischen dem von dem manschettenartigen Dämmelement 3 umgebenen Hohlraum 14 und der Umgebung herstellen. Durch die so zwischen der unteren und der oberen Gleitplatte 5, 6 geschaffenen Kanäle 11 kann Luft in den Hohlraum 14 einströmen oder aus dem Hohlraum 14 herausströmen. Die Strömungsrichtung der Luft ist abhängig von der jeweiligen Belastung des Dämmelements 3, also insbesondere ob das Dämmelement 3 gestaucht oder gestreckt wird. Bewegt sich das Fahrerhaus während des Fahrens nach unten, sowie das Dämmelement 3 zwischen dem Bodenbereich des Fahrerhauses und dem am Motor befestigten Abstützteller, bzw. der daran befestigten unteren Gleitplatte 6, zusammengedrückt und Luft über die Kanäle 11 aus dem Hohlraum 14 in die Umgebung ausgeblasen. Die Kanäle 11 stellen hierbei Strömungswiderstände dar, was letztendlich zu einer Dämpfung der Bewegung des Dämmelements 3 führt. Der gleiche Effekt tritt in umgekehrter Richtung auf, wenn sich das Fahrerhaus nach oben bewegt, der Abstand zwischen Fahrerhaus und Motor als vergrößert wird, und das Dämmelement 3 gestreckt wird. Auch die auf diese Weise realisierte zusätzliche Luftdämpfung stellt sicher, dass eine zuverlässige Abdichtung der Bodenöffnung 13 im Bodenbereich des Fahrerhauses auch bei großen Relativbewegungen zwischen Fahrerhaus und Motor gewährleistet ist.

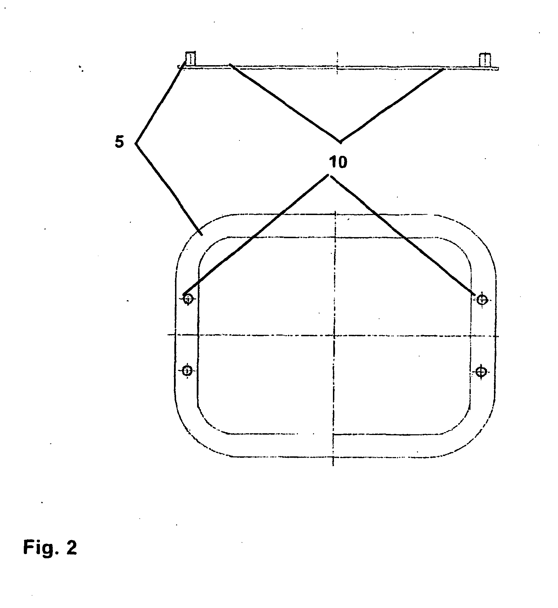

In Figur 2 ist eine obere Gleitplatte 5 in einer Seiten- und einer Draufsicht dargestellt. Die rechteckförmig mit abgerundeten Ecken ausgeführte obere Gleitplatte ist mit Hilfe von vier Stiften 10 am unteren Ende eines Dämmelements (nicht dargestellt) befestigbar. Die vier Stifte 10 sind an den schmalen Seiten sowohl symmetrisch zu einer Längsmittellinie als auch zu einer Quermittelachse der oberen Gleitplatte 5 angeordnet.

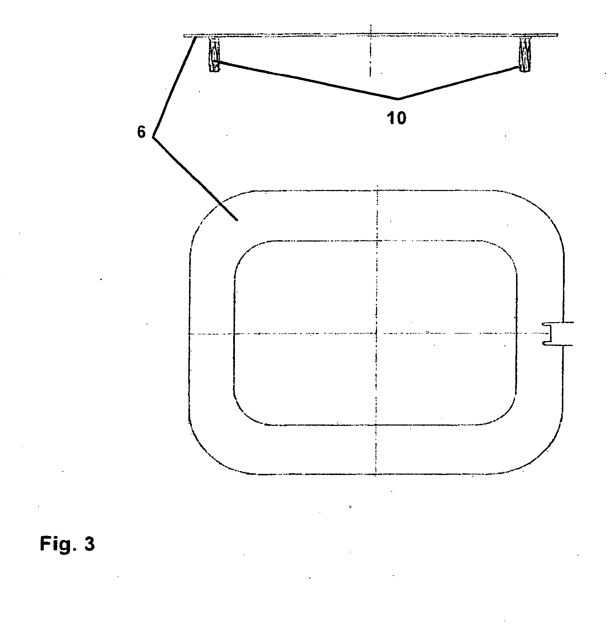

Figur 3 zeigt eine untere Gleitplatte 6 ebenfalls in einer Seiten- und einer Draufsicht. Die untere Gleitplatte verfügt über vier Stifte 10 (zwei hiervon sind in der Seitenansicht von den anderen Stiften verdeckt), die ebenso sowohl symmetrisch zu einer Längsmittellinie als auch zu einer Quermittelachse der unteren Gleitplatte 6 angeordnet sind. Mit Hilfe der Stifte 10 ist die untere Gleitplatte 6, die über eine größere Grundfläche als die obere Gleitplatte 5 verfügt, wie in Figur 1 dargestellt, an einem Abstützteller 7 zu befestigen. Die Stifte 10 werden durch entsprechende Bohrungen in dem Abstützteller hindurchgeführt und mit Hilfe von Muttern bzw. Federmuttern befestigt.

Während der Fahrt eines Nutzfahrzeugs, bzw. wenn das Fahrerhaus nicht gekippt ist, bilden die oberen und die untere Gleitplatte 5, 6 eine Kontaktfläche 8, entlang der die Gleitplatten 5, 6 aufeinander gleiten.

### Bezugszeichenliste

- 1: Schaltungseinheit
- 2: Schaltelement
- 3: Dämmelement
- 4: äußere Manschette
- 5: obere Gleitplatte
- 6: untere Gleitplatte
- 7: Abstützteller
- 8: Kontaktfläche
- 9: Schaltgestänge
- 10: Stift
- 11: Kanal
- 12: Schalthebel
- 13: Bodenöffnung
- 14: Hohlraum
- 15: Innere Manschette

## Patentansprüche

1. Schaltungseinheit (1) eines Nutzfahrzeugs mit kippbarem Fahrerhaus zur Auswahl eines Fahrganges bei einem Mehrstufengetriebe, die zumindest ein Schaltelement (2) aufweist, das in einem nicht gekippten Zustand des Fahrerhauses wenigstens abschnittsweise einen Bodenbereich des Fahrerhauses sowie einen zwischen dem Bodenbereich des Fahrerhauses und einem unterhalb des Bodenbereichs am Motor befestigbaren Abstützteller (7) befindlichen Hohlraum (14) durchragt, wobei der Hohlraum (14) von einem in Form einer hohlzylinderförmigen Manschette ausgebildeten Dämmelement (3), das in seinem oberen Bereich am Fahrerhaus befestigbar ist, zumindest teilweise umschlossen ist,
**dadurch gekennzeichnet, dass**
an dem am Motor befestigbaren Abstützteller (7) eine untere Gleitplatte (6) und am unteren Ende des in Form einer hohlzylinderförmigen Manschette ausgebildeten Dämmelements (3) eine obere Gleitplatte (5) vorgesehen sind, die derart angeordnet sind, dass die untere und die obere Gleitplatte (5, 6) im nicht gekippten Zustand des Fahrerhauses zumindest abschnittsweise eine Kontaktfläche (8) bilden und gegeneinander beweglich gelagert sind.

2. Schaltungseinheit nach Anspruch 1, **dadurch gekennzeichnet, dass** die obere Gleitplatte (5) mittels einer Schraubverbindung mit dem Dämmelement (3) verbunden ist.

3. Schaltungseinheit nach Anspruch 1 oder 2, **dadurch gekennzeichnet, dass** die untere Gleitplatte (6) durch eine Schraubverbindung mit dem Abstützteller (7) verbunden ist.

4. Schaltungseinheit nach Anspruch 1 oder 2, **dadurch gekennzeichnet, dass** die untere Gleitplatte (6) zumindest teilweise durch eine der oberen Gleitplatte (5) zugewandte Oberfläche des Abstütztellers (7) gebildet wird.

5. Schaltungseinheit nach Anspruch 1, 2 oder 4, **dadurch gekennzeichnet, dass** die untere Gleitplatte (6) zumindest abschnittsweise durch eine Beschichtung auf der oberen Gleitplatte (5) zugewandten Oberfläche des Abstütztellers (7) gebildet wird.

6. Schaltungseinheit nach einem der Ansprüche 1 bis 5, **dadurch gekennzeichnet, dass** die untere und/oder die obere Gleitplatte (5, 6) zumindest teilweise aus St-37 gefertigt ist.

7. Schaltungseinheit nach einem der Ansprüche 1 bis 6, **dadurch gekennzeichnet, dass** das zumindest eine Schaltelement (2) zumindest ein Teil eines Schaltgestänges (9) ist.

8. Schaltungseinheit nach einem der Ansprüche 1 bis 7, **dadurch gekennzeichnet, dass** in der unteren und/oder oberen Gleitplatte (5, 6) wenigstens ein Kanal vorgesehen ist, durch den Luft in den von dem Dämmelement (3) umschlossenen Hohlraum (14) hinein leitbar oder aus dem Luft von dem Dämmelement (3) umschlossenen Hohlraum (14) heraus leitbar ist.

9. Schaltungseinheit nach Anspruch 8, **dadurch gekennzeichnet, dass** der wenigstens eine Kanal zwischen der oberen und der unteren Gleitplatte (5, 6) angeordnet ist.

10. Schaltungseinheit nach Anspruch 8 oder 9, **dadurch gekennzeichnet, dass** der wenigstens eine Kanal einen kreisförmigen oder elliptischen Querschnitt aufweist.

11. Schaltungseinheit nach Anspruch 8 oder 9, **dadurch gekennzeichnet, dass** der wenigstens eine Kanal einen rechteckförmigen Querschnitt aufweist.

12. Schaltungseinheit nach einem der Ansprüche 1 bis 11, **dadurch gekennzeichnet, dass** das Dämmelement (3) als Hohlzylinderstück, dessen Zylinderwand wenigstens eine Wölbung aufweist, ausgeführt ist.

13. Schaltungseinheit nach einem der Ansprüche 1 bis 12, **dadurch gekennzeichnet, dass** das Dämmelement (3) balgartig ausgeführt ist.

## Claims

1. Shift device (1) for a utility vehicle with tilting cab for the selection of a gear in a multilevel gearbox, which device includes at least one shift element (2), which shift element protrudes when the cab is not tilted at least in part through a floor area of the cab and through a hollow cavity (14) located between the floor area of the cab and a support plate (7) that can be fastened on the engine under the floor area, whereby the hollow cavity (14) is at least partly encased by an insulating element in the form of a sleeve shaped like a hollow cylinder (3), the upper area of which sleeve can be fastened to the cab,
**characterised in that**
a lower glider plate (6) is included on the support plate (7) that can be fastened to the engine and an upper glider plate (5) is included at the lower end of the insulating element in the form of a sleeve shaped like a hollow cylinder (3), which plates are arranged in such a way that, when the cab is not tilted, the upper and lower glider plates (5, 6) form a contact area (8) at least in part and are mounted to be reciprocally movable.

2. Shift device in accordance with claim 1, **characterised in that** the upper glider plate (5) is connected to the insulating element (3) by a bolted connection.

3. Shift device in accordance with claim 1 or 2, **characterised in that** the lower glider plate (6) is connected to the support plate (7) by a bolted connection.

4. Shift device in accordance with claim 1 or 2, **characterised in that** the lower glider plate (6) is formed at least in part by a surface of the support plate (7) turned towards the upper glider plate (5).

5. Shift device in accordance with claim 1, 2 or 4, **characterised in that** the lower glider plate (6) is formed at least in part by a coating on the surface of the support plate (7) turned towards the upper glider plate (5).

6. Shift device in accordance with one of claims 1 to 5, **characterised in that** the lower and/or upper glider plate (5, 6) is made at least partly of St-37.

7. Shift device in accordance with one of claims 1 to 6, **characterised in that** the at least one shift element (2) forms at least one part of a gearshift linkage (9).

8. Shift device in accordance with one of claims 1 to 7, **characterised in that**, in the lower and/or upper glider plate (5, 6) at least one duct is provided, through which duct air can be guided into the hollow cavity (14) encased by the insulating element (3) or out of which duct air can be guided out of the hollow cavity (14) encased by the insulating element (3).

9. Shift device in accordance with claim 8, **characterised in that** the at least one duct is arranged between the upper and the lower glider plate (5, 6).

10. Shift device in accordance with claim 8 or 9, **characterised in that** the at least one duct is provided with a circular or elliptical cross-section.

11. Shift device in accordance with claim 8 or 9, **characterised in that** the at least one duct is provided with a rectangular cross-section.

12. Shift device in accordance with one of claims 1 to 11, **characterised in that** the insulating element (3) is designed as a hollow-cylinder piece, the cylinder wall of which hollow-cylinder piece possesses at least one curvature.

13. Shift device in accordance with one of claims 1 to 12, **characterised in that** the insulating element (3) is designed like a bellows.

## Revendications

1. Unité de commande de vitesses (1) d'un véhicule industriel avec cabine basculable pour sélectionner un rapport de conduite dans une boîte de vitesses à plusieurs rapports, qui présente au moins un élément de commande de vitesses (2) qui, dans un état non-basculé de la cabine, passe au moins par section à travers une zone de plancher de la cabine ainsi qu'à travers d'un espace creux (14) se trouvant entre la zone de plancher de la cabine et un plateau d'appui (7) pouvant être fixé en dessous de la zone de plancher au niveau du moteur, auquel cas l'espace creux (14) est entouré au moins partiellement d'un élément insonorisant (3) formé d'un manchon en forme de cylindre creux, cet élément pouvant être fixé dans sa partie supérieure sur la cabine,
**caractérisée en ce que**
Au niveau du plateau d'appui (7) pouvant être fixé sur le moteur, une plaque directrice inférieure (6) et, au niveau de l'extrémité inférieure de l'élément insonorisant (3) formé par un manchon en forme de cylindre creux, une plaque directrice supérieure (5) sont prévues et sont disposées de telle sorte que les plaques directrices inférieure et supérieure (5, 6) forment au moins par section une surface de contact (8) dans l'état non-basculé de la cabine et sont fixées de manière mobile l'une par rapport à l'autre.

2. Unité de commande de vitesses selon la revendication 1, **caractérisée en ce que** la plaque directrice supérieure (5) est reliée à l'élément insonorisant (3) au moyen d'une liaison vissée.

3. Unité de commande de vitesses selon la revendication 1 ou 2, **caractérisée en ce que** la plaque directrice inférieure (6) est reliée au plateau d'appui (7) par une liaison vissée.

4. Unité de commande de vitesses selon la revendication 1 ou 2, **caractérisée en ce que** la plaque directrice inférieure (6) est formée au moins partiellement d'une surface de plateau d'appui (7) orientée vers la plaque directrice supérieure (5).

5. Unité de commande de vitesses selon la revendication 1, 2 ou 4, **caractérisée en ce que** la plaque directrice inférieure (6) est formée au moins par section d'un revêtement sur la surface de plateau d'appui (7) orientée vers la plaque directrice supérieure (5).

6. Unité de commande de vitesses selon l'une des revendications 1 à 5, **caractérisée en ce que** la plaque directrice inférieure et/ou supérieure (5, 6) est/sont fabriquée(s) au moins partiellement en acier St-37.

7. Unité de commande de vitesses selon l'une des revendications 1 à 6, **caractérisée en ce qu'**au moins l'unique élément de commande de vitesses (2) fait au moins partie d'une tringlerie de commande de vitesses (9).

8. Unité de commande de vitesses selon l'une des revendications 1 à 7, **caractérisée en ce qu'**est prévu, dans la plaque directrice inférieure et/ou supérieure (5, 6), au moins un canal par lequel de l'air peut être amené dans l'espace creux (14) entouré par l'élément insonorisant (3) ou hors duquel de l'air peut sortir de l'espace creux (14) entouré par l'élément insonorisant (3).

9. Unité de commande de vitesses selon la revendication 8, **caractérisée en ce qu'**au moins l'unique canal est disposé entre la plaque directrice supérieure et la plaque directrice inférieure (5, 6).

10. Unité de commande de vitesses selon la revendication 8 ou 9, **caractérisée en ce qu'**au moins l'unique canal présente une section de forme circulaire ou elliptique.

11. Unité de commande de vitesses selon la revendication 8 ou 9, **caractérisée en ce qu'**au moins l'unique canal présente une section de forme rectangulaire.

12. Unité de commande de vitesses selon l'une des revendications 1 à 11, **caractérisée en ce que** l'élément insonorisant (3) est exécuté comme élément cylindrique creux dont la paroi de cylindre présente au moins une courbure.

13. Unité de commande de vitesses selon l'une des revendications 1 à 12, **caractérisée en ce que** l'élément insonorisant (3) est exécuté de la forme d'un soufflet.
